# EUROPEAN PATENT SPECIFICATION

(11) **EP 0 510 585 B1**
(45) Date of publication and mention of the grant of the patent: **07.07.1999**
(21) Application number: 92106810.2
(22) Date of filing: 21.04.1992
(51) Int. Cl.: F02M 21/02, F02D 19/02, F02B 31/00, F02M 35/10, F02B 27/02

(54) **Gas engine**
Gasmotor
Moteur à gaz

(30) Priority: 20.04.1991 JP 11699191; 20.04.1991 JP 11699291; 20.04.1991 JP 11699391; 20.04.1991 JP 11699491
(43) Date of publication of application: 28.10.1992
(73) Proprietor: YAMAHA HATSUDOKI KABUSHIKI KAISHA, Iwata-shi Shizuoka-ken, 438 (JP)
(72) Inventor: Kurihara, Noriyuki, Hamamatsu-shi, Shizuoka-ken (JP); Iida, Yoshikatsu, Kakegawa-shi, Shizuoka-ken (JP)
(74) Representative: Grünecker, Kinkeldey, Stockmair & Schwanhäusser Anwaltssozietät

(56) References cited:
- EP-A- 0 182 223
- EP-A- 0 346 989
- DE-A- 3 913 358
- GB-A- 865 413
- GB-A- 2 086 485
- GB-A- 2 139 699
- US-A- 4 263 882
- US-A- 4 304 211
- US-A- 4 932 378

## Description

The present invention relates to a gas engine comprising a source of gaseous fuel stored under pressure as a liquid, said gaseous fuel being supplied to a carburettor of an induction system for inducting atmospheric air and delivering an air/fuel mixture to a combustion chamber of the engine under control of a control means controlling said air/fuel ratio of the mixture in response to engine operating conditions, wherein the gaseous fuel is supplied to the carburettor via a pressure regulator which comprises a first outlet conduit opening to a venturi section of the carburettor via a flow control valve and a second outlet conduit supplying fuel for idle condition towards the combustion chamber and wherein an air bleed control valve means is controlled by said control means for bleeding air into the gaseous fuel flows of said first and second outlets conduits with bleeding air being supplied from upstream of the venturi section to be introduced into the first outlet conduit upstream of the flow control valve.

Such a gas engine is known from document DE-A-39 13 358. However, according to this document, atmospheric air is directly introduced from a conduit through a valve into the additional fuel supply circuit. Moreover, there is no indication in this document to provide mixture of intake air and gaseous fuel to the addition fuel supply circuit.

Moreover, document EP-A-346 989 discloses a device for the intelligent control of a venturi-type carburettor unit for a gaseous fuel, including a pressure regulator, a main throttle valve in the air suction pipe for control of the engine output and a regulating valve in the gas supply pipe between the pressure regulator and the venturi, said valve being coupled to the main throttle valve. By adjusting this mechanical system for providing a too rich air-fuel-mixture under all conditions, only minor adjustments of the mixture are necessary to provide the engine with the correct mixture required for each load/speed condition. Said requirements are stored in a processor, and the latter controls the necessary corrections of the mixture by diluting the gas flow to the main venturi with some air. To this end, a small venturi is placed in the gas pipe, the gas flow sucking the diluting air through a mixing air regulating valve, which valve is controlled by the processor in a continuous, analogues intelligent way. Optionally an 0₂-sensor placed in the exhaust gases may send feed-back signals to the processor for last corrections.

Therefore, this document in addition does not give an indication to provide a mixture of intake air and gaseous fuel to the addition fuel supply circuit.

In the interest of protecting the environment and conserving nature resources, it has been proposed to operate internal combustion engines on a gaseous fuel. The gaseous fuel is stored under pressure as a liquid in a container and then is delivered to the engine through a regulating and induction system for its operation. In addition to the aforenoted environmental advantages, gaseous fuels tend to promote longer engine life and longer service intervals due to the fact that the burn more cleanly in the combustion chamber of the engine.

Although such gaseous fuels have the aforenoted advantages, it is somewhat more difficult to control accurately the air/fuel ratio with gaseous fuels because of their nature. For example, it has been proposed to control the air/fuel ratio of a gaseous fueled engine by mixing atmospheric air with the gaseous fuel before the fuel is delivered to the charge former. However, this has previously been done by mixing the atmospheric air with the gaseous fuel after the fuel has been passed through a flow regulating throttle type valve. As a result, the air is mixed with the fuel when it is at an extremely low absolute pressure and which may, in fact, even be slightly less than atmospheric pressure. As a result, when the air is added, the amount of gaseous fuel supplied is not reduced and the air/fuel ratio cannot be as accurately controlled as desired.

Moreover, in order to assure the maximum advantages of gaseous fueled engines, it is desirable to insure that the induction system for the engine has optimum efficiency. For example, it is well known that it is desirable to induce turbulence in the combustion chamber, particularly at low speeds, in order to insure complete and rapid combustion. However, the induction of a turbulent charge into the combustion chamber reduces the volumetric efficiency of the engine and can reduce power outputs at high speeds.

In addition to the differences required for induction at low speed and high speed operations, there are a number of a various other running conditions of the engine which dictate differences in the performance of the induction system depending upon the actual speed and load of the engine. Devices which may operate to assist under one running condition, can be detrimental under another running condition. Therefore, induction systems employed with gas fueled engines have tended to be a compromise in order to operate satisfactorily, but less than most efficiently, under all conditions.

As with other types of fuel on which internal combustion engines operate, it is necessary to mix the fuel with air so as to provide a stoichiometric mixture within the combustion chamber that can be easily ignited and which will burn efficiently and completely. It has generally been the practice to employ a charge former such as a carburetor for mixing the gaseous fuel with atmospheric air for delivery to the engine through its induction system. The gaseous fuel is supplied to the charge former from a source in which the fuel is stored under pressure as a liquid and a regulator is employed in the system between the source and the charge former. As with other forms of fuel, the charge former must provide good air and fuel mixing under all running conditions. This generally necessitates the formation of compound or plural discharge circuits in the carburetor. For example, it is conventional to employ an idle discharge circuit and a main fuel discharge circuit. Such carburetors are employed conventionally with gaseous fueled engines.

However, when operating with gaseous fuel there are some instances when it is not desirable to perform all of the fuel and air mixing within the charge former. That is, if all of the fuel/air mixing is accomplished within the charge former, the performance of the engine under running conditions such as idle or low speed operation or transient conditions may not be optimum. One running condition that provides difficulty in insuring good fuel/air mixing and adequate fuel in the combustion chamber for combustion is during acceleration. Gaseous fuels like liquid fuels do not accelerate as rapidly as air flow when the engine is rapidly accelerated. This is due to the more dense nature of the fuel than the air. In order to reduce the likelihood of lean running, it is desirable to provide some additional fuel enrichment during the initial period when the throttle valve of the engine is rapidly opened.

These problems become even more acute when the acceleration takes place at the end of a long period of deceleration or at the end of a rapid deceleration. When the engine is being decelerated, the throttle valve is generally closed and little or no fuel is supplied. As a result, the area between the throttle valve and the combustion chamber will be depleted of fuel. Thus, when the throttle valve is rapidly opened, although the air flow may increase, it will take a long time for the fuel to reach the combustion chamber and poor running can occur.

Thus, it is an objective of the present invention to provide a gas engine which has an improved charge forming means and enables accurate control of the air/fuel ratio.

According to the present invention, the above-mentioned objective is performed through a gas engine as initially indicated by bleeding air being supplied from downstream of the venturi section to said second outlet conduit.

According to a preferred embodiment of the present invention, the control means comprises at least one needle valve of said carburettor.

According to another preferred embodiment of the present invention, in addition to said air bleed control valve means for introducing atmospheric air into the flow of gaseous fuel upstream of the carburettor, there is provided a separate air bleed valve for receiving atmospheric air, wherein preferably such a separate air bleed valve is provided for each of the first and second outlet conduits of the carburettor.

Other preferred embodiments of the present invention are laid down in the further subclaims.

In the following the present invention is explained in further detail by means of a plurality of embodiments in conjunction with the associated drawings, wherein:
Figure 1 is a partial cross sectional view taken through a portion of a single cylinder of an internal combustion engine constructed in accordance with an embodiment of the invention;
Figure 2 is a partially schematic top plan view of the portion of the engine shown in Figure 1 and also shows a part of the fuel supply system for the engine and the control therefore;
Figure 3 is a cross sectional view taken through a fuel pressure regulator constructed in accordance with a first embodiment of the invention;
Figure 4 is a cross sectional view, in part similar to Figure 3, and shows a further embodiment of the invention;
Figure 5 is a view in part similar to Figure 2 showing the cooperation of the regulator of the embodiment of Figure 4 with the engine and with a further modified charge former;
Figure 6 is a cross sectional view taken through a portion of an internal combustion engine constructed in accordance with the first embodiment of invention, shown in Fig. 1;
Figure 7 is a partial top plan view of the engine, with portions of the charge forming system shown in cross section and other components shown schematically substantially corresponding to Fig. 2;
Figure 8 is a cross sectional view, in part similar to Figure 1, and shows another gas engine;
Figure 9 is a top plan view, in part similar to Figure 7 and shows the components of this embodiment;
Figure 10 is a partial cross sectional view, in part similar to Figures 6 and 8 and shows a still further gas engine;
Figure 11 is a partial top plan view, in part similar to Figures 7 and 9, of this embodiment;
Figure 12 is a partial cross sectional view, in part similar to Figures 6, 8 and 10 and shows yet another gas engine;
Figure 13 is an enlarged elevational view of an auxiliary throttle valve that may be employed with the embodiment of Figure 12;
Figure 14 is an enlarged elevational view, in part similar to Figure 13, and shows another type of auxiliary throttle valve that may be used with the embodiment of Figure 12;
Figure 15 is a partial cross sectional view, in part similar to Figures 6, 8, 10 and 12 and shows yet another gas engine;
Figure 16 is a top plan view, similar to Figures 7 , 9 and 11, for this embodiment;
Figure 17 is a cross sectional view, in part similar to Figures 6, 8, 10, 12 and 15 , and shows yet another gas engine;
Figure 18 is a top plan view, in part similar to Figures 7, 9, 11 and 16 for this embodiment; and
Fig. 19a and 19b are explanatory sketches of a cross section of the main fuel supply conduit 62 to show the fuel amount regulating function of the needle valve 76.

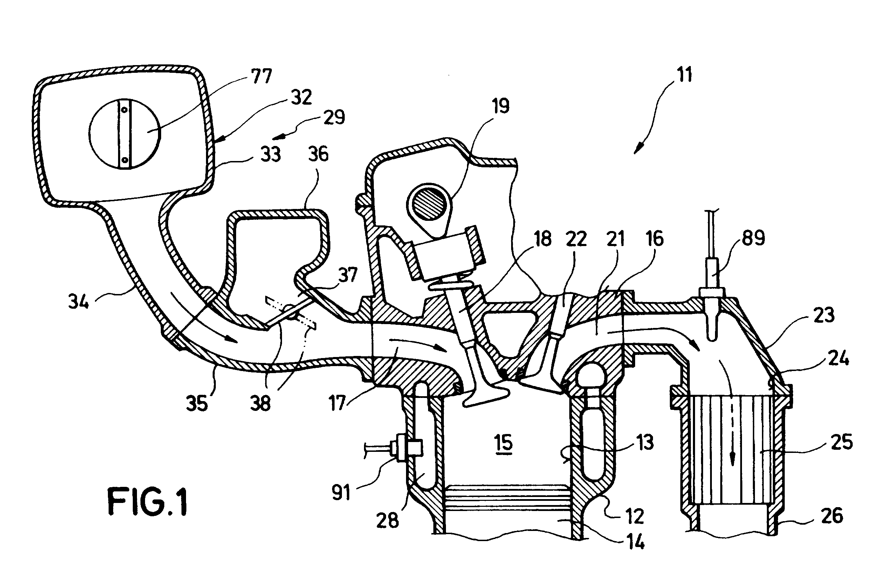

Referring now in detail to the drawings and initially primarily to Figures 1, 2, 6 and 7 an internal combustion engine provided with a fuel supply system constructed in accordance with a first embodiment of the invention is shown partially and identified generally by the reference numeral 11. The engine 11 is only shown partially because the internal details of the engine, except for its charge forming system and the controls therefore, form no part of the invention. However, a portion of the engine 11 is depicted for ease in understanding how the invention may be practiced in conjunction with any known types of internal combustion engines. It also should be noted that the charge forming system is not limited to use in reciprocating engines of the type depicted but may be also employed with rotary type of engines. Also, the invention is described in conjunction with only a single cylinder of a multi-cylinder engine as it is believed that those skilled in the art can readily understand how the invention is practiced in conjunction with multiple cylinder engines and engines of varying configurations.

The engine 11 includes a cylinder block 12 have one or more cylinder bores 13 in which pistons 14 are slidably supported. The pistons 14 are connected in a known manner by connecting rods (not shown) to a crankshaft for providing an output from the engine 11. The cylinder bore 13 and head of the piston 14 form a combustion chamber 15 along with a cylinder head 16 that is affixed in a known manner to the cylinder block 12.

One or more intake passages 17 extend through one side of the cylinder head 16 and have their communication with the combustion chamber 15 controlled by poppet or intake valves 18 that are slidably supported in the cylinder head 16 in a well known manner. An intake camshaft 19 is rotatably journalled in the cylinder head 16 and operates the intake valves 18 in well known manner.

An exhaust passage 21 extends through the opposite side of the cylinder head 16 from each combustion chamber 15. The flow through the exhaust passages 21 is controlled by poppet type exhaust valves 22 which are also operated by an overhead mounted camshaft (not shown) in a well known manner.

An exhaust manifold 23 is affixed to the exhaust side of the cylinder head 16 and receives the exhaust gases from the exhaust passages 21. An outlet 24 of the exhaust manifold 23 communicates with a catalytic converter 25 having a catalyst bed that includes a so called three-way catalyzer for oxidizing carbon monoxide (CO) and hydrocarbons (HC) while deoxidizing nitrous oxide (NOₓ) to render the exhaust gases as harmless as possible. The exhaust gases thus treated are then discharged to the atmosphere through an exhaust pipe 26 and appropriate exhaust and muffler system (not shown).

In the illustrated embodiment, the engine 11 is of the four valve per cylinder type (i.e. two intake valves 18 and two exhaust valves 22 per cylinder). Of course, it should be readily apparent to those skilled in the art that the invention can be employed with engines having other types of valving or porting systems. A spark plug 27 is mounted in the cylinder head 16 and has its spark gap disposed centrally in the combustion chamber 15 for firing the charge therein in a well known manner.

The engine 11 is also water-cooled in the illustrated embodiment and to this end the cylinder block 12 and cylinder head 16 are provided with a cooling jacket or cooling jackets 28 through which liquid coolant is circulated by means of a coolant pump (not shown). This coolant is then passed through an external heat exchanger (not shown) for cooling in a well known manner.

A fuel/air charge is supplied to the combustion chambers 15 by means of an induction system and charge forming means, indicated generally by the reference numeral 29 and which includes a charge forming device in the form of a carburetor 31 which is mounted in the inlet section of an elongated plenum chamber 32 that extends along the intake side of the engine and which is defined by an outer housing 33. A plurality cf individual runner sections 34 extend from the housing section 33 to individual manifold runners 35 which supply each of the intake passages 17 of the engine 11.

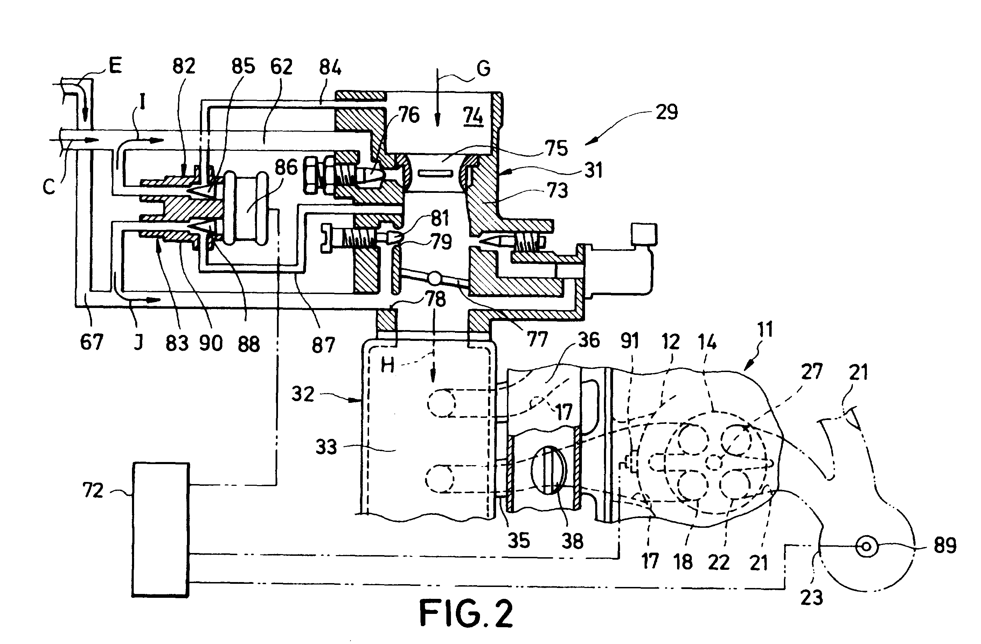

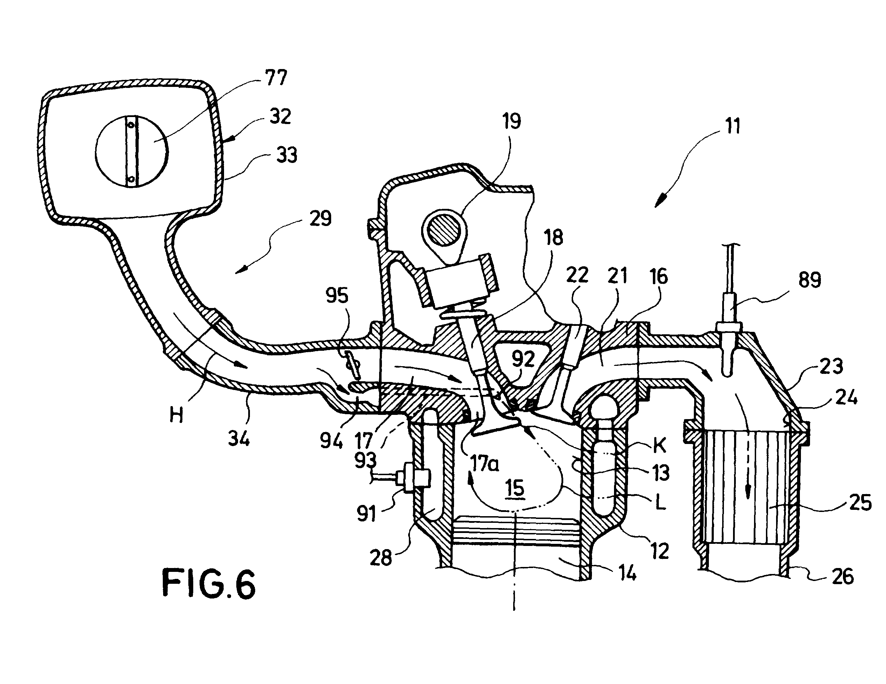

In order to improve the charging efficiency of the engine 11 at high speeds, a high speed plenum chamber 36 extends along the upper portion of the manifold runners 35 and communicates with the individual runners through passages 37. Throttle valves 38 are provided in the passages 37 for communicating the high speed plenum chamber 36 with the manifold runners 35. The throttle valves 38 are maintained in a closed position, as shown in solid lines in Figs. 1 and 6, when the engine 11 is operating at low and mid range speeds. However, as the engine 11 reaches high speed, the throttle valves 38 are opened to the phantom line position shown in figures 1 and 2 so as to communicate the high speed plenum chamber 36 with the individual manifold runners 35. In this way, the intake pulses from the individual cylinder bores 13 of the engine 11 will be employed for adding to the charging efficiency of the engine 11 and improve its high speed performance.

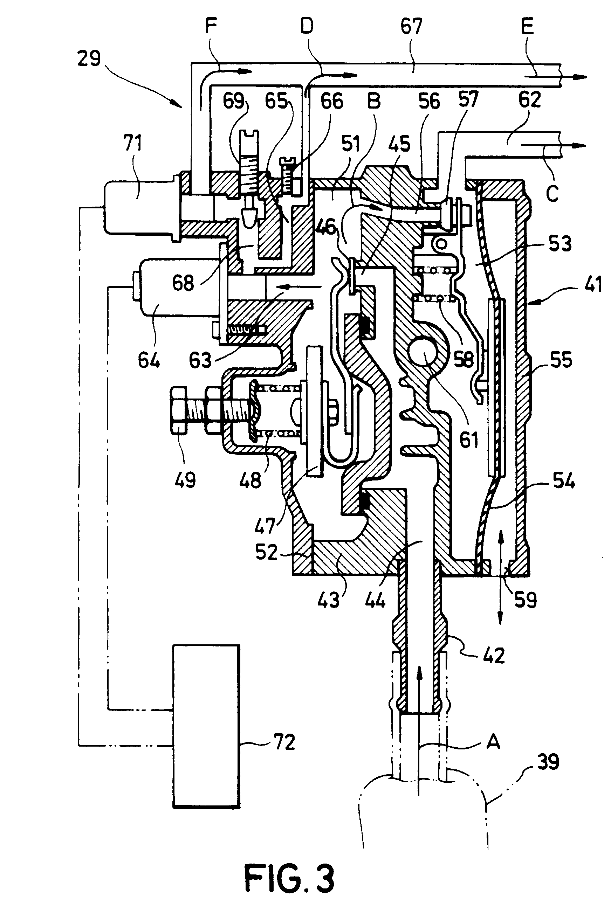

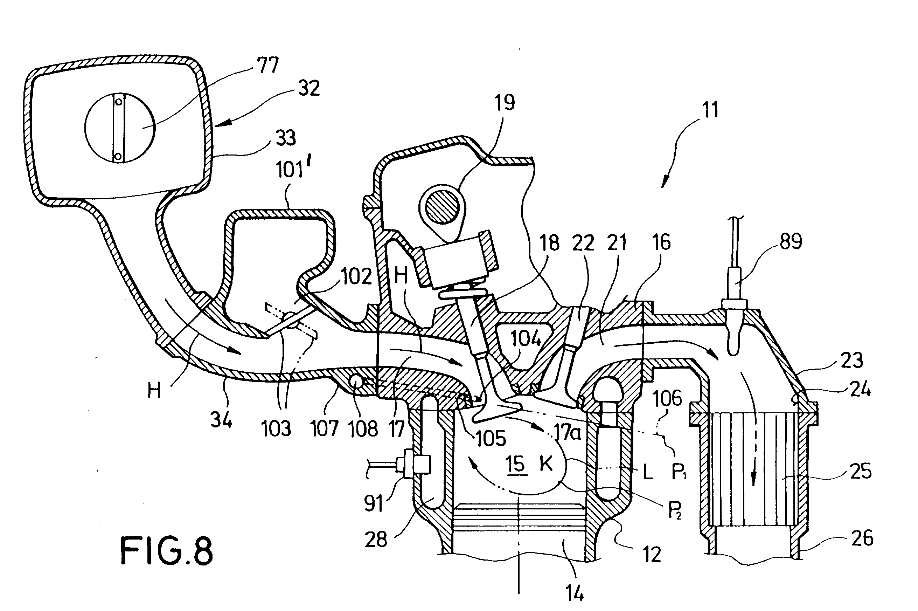

In accordance with the invention, the engine 11 is fueled with a gaseous fuel preferably liquified petroleum gas that is stored under pressure as a liquid in a pressure source, show in phantom at 39 in Figures 3 and 8. The fuel from the high pressure source 39 is delivered to a pressure regulator, indicated generally by the reference numeral 41 through an inlet conduit 42 of the regulator 41 as shown by the arrow A.

The regulator 41 is comprised of an outer housing assembly including a main body portion 43 in which an inlet passage 44 is formed that communicates with the inlet conduit 42. The inlet passage 44 extends to a first pressure stage regulating port 45 which has its opening and closing controlled by a valve 46 that is operated by an assembly 47 which is biased by a spring 48 have its preload adjusted by a screw 49. The valve 46 opens and closes communication with a chamber 51 formed by the housing 43 and a first cover plate 52 so as to reduce the pressure of the gaseous fuel in a first stage to a pressure of about 0.3 Kg/cm² gauge.

The first regulating chamber 51 communicates with a second regulating chamber 53 formed by a cavity in the side of the main body portion 43 opposite the first cover plate 52 and which is closed by means of a diaphragm 54 held in place by a second cover plate 55. A passageway 56 communicates the second chamber 53 with the first chamber 51 and a second pressure regulating valve 57 operated by the diaphragm 54 controls the opening and closing of the passageway 56 so that gas will flow in the direction of the arrow B. A biasing spring 58 acts against the diaphragm 54 and the backside of the diaphragm 54 is opened to atmospheric pressure through an atmospheric port 59 so that the second regulating stage will reduce the pressure of the gaseous fuel in the second chamber 53 to just slightly below atmospheric pressure.

The liquid coolant which has been heated in the engine cooling jacket 28 is also circulated through the regulator 41 and to this end there is provided an internal heating passage 61 formed in the main body portion 43 which is in communication both with the gas entering the inlet passage 44 and the second regulating chamber 53 so as to maintain a more uniform temperature of the gas in the regulator 41 so as to insure better regulation and better control of the pressure of the gaseous fuel delivered to the carburettor 31.

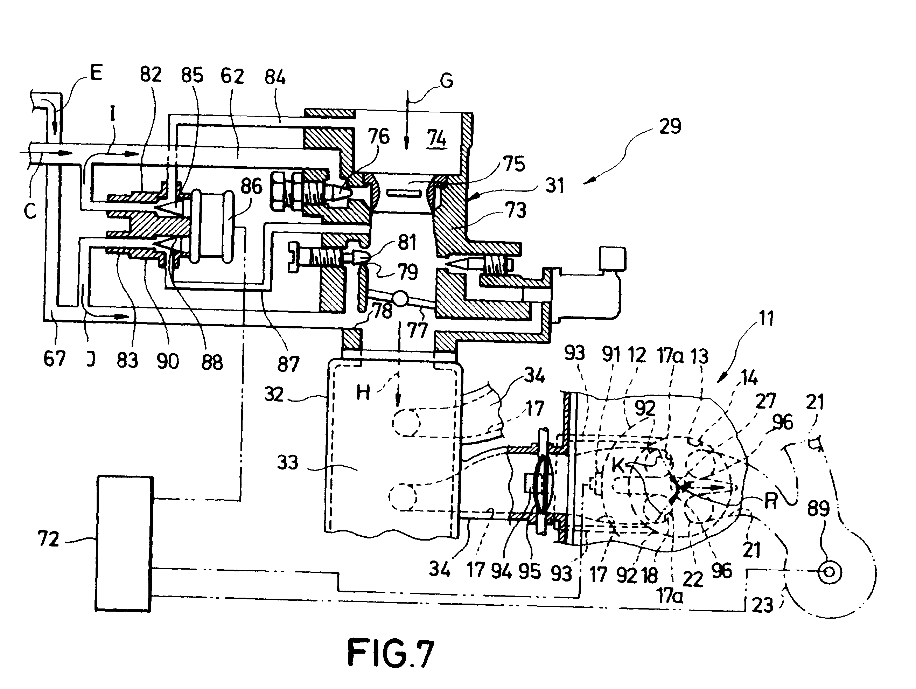

A first outlet conduit 62 delivers the two stage pressure regulated gaseous fuel to the main fuel circuit of the carburetor 31 as shown by the arrow C. This main fuel circuit will be described later by reference again to Figures 2 and 7.

Gaseous fuel is also supplied from the regulator 41 to the idle and off-idle circuits of the carburetor 31 but at a slightly higher pressure than the fuel pressure supplied to the main fuel circuit. To accomplish this, a second delivery passage 63 is formed in the first cover plate 52 and communicates with the first regulating chamber 51. An electrically operated shut-off valve 64 controls the communication of the second delivery passage 63 with a further supply passage 65 formed in the first cover plate 52. A flow controlling needle valve 66 communicates the supply passage 65 with a second outlet conduit 67 which extends to the idle and off-idle circuits of the carburetor 31 in a manner which will be described also by reference to Figure 2. This idle fuel flow is indicated by the arrow D.

The second delivery passage 63 also supplies an enrichment passage 68 formed in the first cover plate 52 and in which a flow controlling needle valve 69 is positioned. An electrically operated enrichment valve 71 controls the communication of the enrichment passage 68 with the second outlet conduit 67 to permit flow as indicated by the arrow F.

A CPU or control means, indicated generally by the reference numeral 72 is provided for controlling the fuel system including the shut-off valve 64 and the enrichment valve 71. The CPU 72 closes the shut-off valve 64 under conditions when the engine is not operating or in the event of an emergency such as a collision.

Moreover, in addition to a throttle valve 77 the shut-off valve 64 also contributes to interrupt the fuel supply when the engine 11 is decelerated, namely when the engine 11 is decelerated under high engine running speeds, as in that case the shut-off valve 64 cuts the fuel supply and no fuel is supplied to the engine 11 through the first outlet conduit 62 any longer.

The enrichment valve 71 is opened by the CPU 72 under conditions of cold start or acceleration as determined by rapid opening of the throttle 77 of the carburetor 31.

Referring now again to Figs. 2 and 7, the carburetcr 31 includes a main body portion 73 which defines an air horn 74 that received atmospheric air, indicated by the arrow G, from a suitable air cleaner and/or air silencer (not shown).

A venturi section 75 is formed downstream of the air horn 74 and has fuel discharge openings for discharging gases fuel from the first outlet conduit 62. A flow controlling needle valve 76 controls the amount of fuel discharged through the venturi section 75.

The throttle valve 77 is positioned downstream of the venturi section 75 and is controlled by a remote throttle control mechanism, as is well known in this art. The throttle valve 77 communicates directly with the plenum chamber 32, as aforenoted.

The carburetor 31 is also provided with an idle fuel discharge port 78 which is positioned downstream of the throttle valve 77 and an upstream transition port 79 with the flow through this port 79 being controlled by an adjustable needle valve 81. The second outlet conduit 67 from the first pressure regulating chamber 51 of the pressure regulator 41 supplies the idle fuel discharge port 78 and transition port 79.

Although the needle valves 76 and 81 are supplied for adjusting the fuel/air ratio from the main fuel discharge nozzle at the venturi section 75 and from the transition port 79, these needle valves 76 and 81 only give a course adjustment and are not adapted to control minute variations to maintain a uniform air/fuel ratio under all running conditions. This is extremely important to the efficient running of the engine 11 and the good operation of the catalytic converter 25. Therefore, a pair of air bleed control valves, indicated generally by the reference numerals 82 and 83 are provided for bleeding air into the first outlet conduit 62 and second outlet conduit 67, respectively.

The main fuel air bleed control valve 82 receives atmospheric air from the air horn 74 through a conduit 84 and mixes it as shown by the arrow I under the control of a needle valve 85 that is operated by a solenoid operated stepping motor 86. In a like manner, the idle air bleed control valve 83 receives atmospheric air from a conduit 87 downstream of the venturi section 75 and delivers it to the idle fuel supply line or second outlet conduit 67 as shown by the arrow J under the control of a needle valve 88 which, in this embodiment, is also controlled by the same stepping motor 86. The air bleed control valves 82 and 83 are positioned in a common housing 90 in this embodiment. If desired, the air bleed control valves 82 and 83 may be operated separately by independently controlled stepping motors.

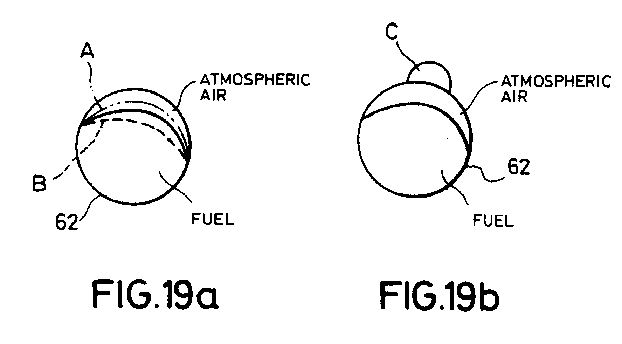

Pointing to Figures 19a and b which only roughly indicate, summarily and schematically, the function of the needle valve 76, it should be noted that the position of said needle valve 76 allows the amount of gaseous fuel within the air fuel mixture in the first outlet conduit 62 to be adjusted (due to the back pressure creating action of the needle valve 76) which could otherwise not be created. More specifically, Figure 19a reflects the present arrangement as explained in the preceding figures, supplying gas mixture which comprises mainly fuel but also contains air bled through the air bleed control valve 82 upstream of the needle valve 76, as is schematically indicated in Figure 19a. Through said air bleed control valve 82 and the provision of the needle valve 76 (Figure 19a) a highly sensitive fine tuning of the amount of atmospheric air bled into the flow of gaseous fuel can be achieved as indicated by the dotted line B (for a greater amount of air reducing the fuel amount) or a dash-dotted line E for a smaller amount of bled air supplied through the air bleed control valve 82. This effect can be obtained with a relatively small dimension air bleed valve which, due to the provision of the needle valve 76, does not need a high performance or demands voluminous construction as would otherwise be the case, i.e., in the absence of said needle valve 76.

In the case of the omission of the needle valve 76 (the consequences are roughly shown in Figure 19b), only small fluctuations in view of a variation of the air amount in the air fuel mixture would be obtained (which are not shown in Figure 19b) and practically the total amount of fuel supplied would remain constant and could not be varied in the manner as shown in Figure 19a. By the way, it should also be noted that the bleeding of atmospheric air into the flow of gaseous fuel, as explained above, does not normally lead to an even distribution of the air within the gaseous fuel but to an air layer being formed along the inner wall of the first outlet conduit 62, keeping the air phase relatively separate from the fuel phase of the air/fuel mixture.

The stepping motor 86 is also controlled by the CPU 72 which receives inputs from an oxygen sensor 89 positioned in the exhaust manifold 23 upstream of the catalytic convertor 25. The CPU 72 also receives an engine temperature signal from an engine temperature sensor 91 for providing the cold starting enrichment control of the enrichment valve 71. In addition, a throttle position sensor (not shown) outputs a signal to the CPU 72 for acceleration enrichment. Various other ambient or engine conditions may be supplied to the CPU 72 for also controlling its operation.

Since the air is bled into the first outlet conduit 62 and second outlet conduit 67 upstream of the flow controlling needle valves 76 and 81, the air/fuel ratio may be more accurately controlled so as to maintain it in the range of 15.5 ± 0.1. As a result, the engine 11 can be operated with extremely good fuel control, fuel economy and exhaust emission control. As discussed above, the main fuel supply circuit or first outlet conduit 62 and the additional fuel supply circuit or second outlet conduit 67 are provided in order to meet different engine operating conditions, but it needs to be considered that the flow rate of the fuel should change smoothly when the engine operating state shifts from one in which the fuel is substantially supplied through the additional fuel supply circuit (outer supply conduit 67) to another state in which fuel supply through the main fuel supply circuit (main fuel supply conduit 62) is required. In order to have such a smooth transition, a control strategy must be applied which issues what is called "connection" between the two fuel supply circuits hereinafter. As it has been found impossible to render the additional fuel supply circuit and the main fuel supply circuit to be perfectly independent from each other because of this need for connection in order to meet the needs of transitional states, much labour has been spent to connect both circuits smoothly in their supply characteristics.

In the following, a means which has been found effective to overcome these difficulties is described, namely a feedback control system which allows the fuel in the additional fuel supply circuit (idle supply conduit 67) and the main fuel supply circuit (main fuel supply conduit 62) to be controlled simultaneously according to the oxygen concentration of the exhaust gas detected, even if both fuel supply circuits 62 and 67 are separated from each other. Of course, it is impossible to decide from the oxygen concentration whether fuel supply has taken place from the main fuel supply circuit 62 or the additional fuel supply circuit 67. Therefore, further difficulties for an appropriate control arise if the signals from an oxygen sensor are used as they are for simultaneously controlling the fuel supply from the additional fuel supply circuit 67 and the main fuel supply circuit 62, leaving the rest to an automatic control, the difficulties resulting from the connection of both circuits 62 and 67 can be taken by a feedback control system. Moreover, if the fuel flow rate is controlled indirectly using an air amount as a direct control parameter, a safe and inexpensive system is obtained as the control valve for controlling air is less complicated.

In the following, the feedback control system applied in the present embodiment is described in greater detail.

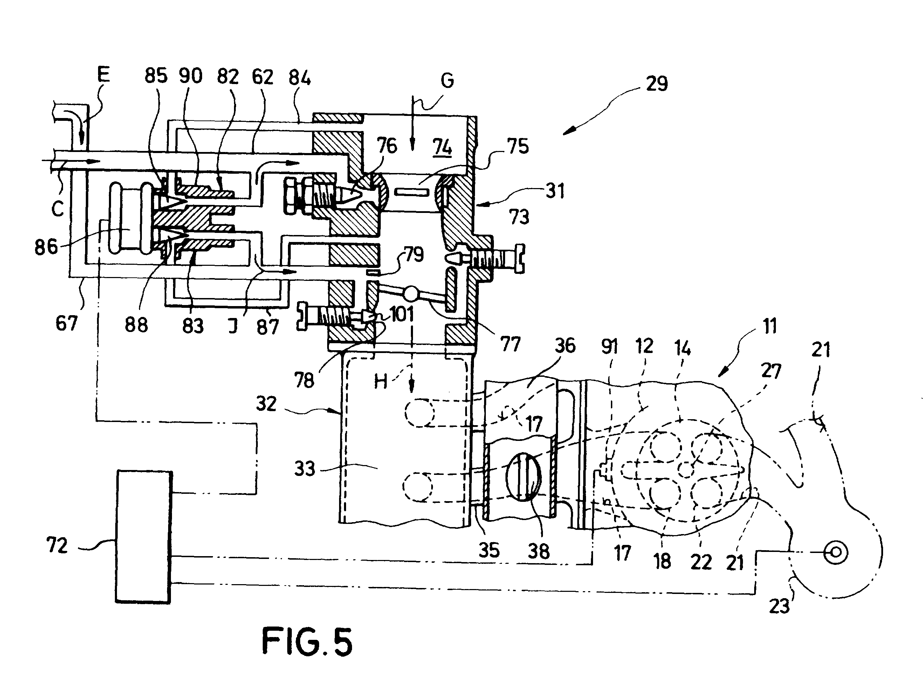

As shown in Figure 5, an air introducing passage or conduit 84 is provided for supplying the air at about atmospheric pressure as prevaling in the intake passage or air horn 74 at the upstream side of the venturi section 75 to be sucked into a midway portion of the main fuel passage or first outlet conduit 62 by means of the fuel air bleed control valve 82. Said air bleed control valve 82 adjusts the air flow rate of this air introducing passage substantially continuously. As already mentioned, the air bleed control valve 82 together with the parallel air bleed control valve 83 is accommodated in a common housing 90, wherein a needle valve 85 is disposed for opening or closing the air introducing conduit 84, operated by the stepping motor 86, which opens or closes the air introducing conduit 84 almost continuously. Thus, the air bleed control valve 82 (for the main fuel supply circuit) and correspondingly the parallel air bleed control valve 83 (for the additional fuel supply circuit) constitute the main components of this feedback control system.

As indicated, the oxygen sensor 89 is positioned in the exhaust manifold 23 upstream of the catalytic converter 25 to detect the oxygen concentration among the constituent concentrations of the exhaust gas of the engine 11.

The opening of the needle valve 85 is automatically adjusted according to the output signal of the oxygen sensor 89 through the CPU 72 and an amount of air corresponding to the opening of the needle valve 85 is supplied to the gaseous fuel in the main fuel supply conduit 62 (see arrow I). In practice, the opening of the main needle valve 85, at the beginning, is set such that the gaseous fuel supply through the main fuel supply conduit 62 may produce an air-fuel mixture which is somewhat richer than the engine stalling range. If the oxygen sensor 89 detects the oxygen concentration in the exhaust gas to be higher than a predetermined value, the opening of the needle valve 85 is reduced leading to the amount of air supply to be also reduced. If on the contrary, the oxygen sensor 89 detects the oxygen concentration in the exhaust gas to be lower than a predetermined value, the opening of the needle valve 85 is increased such that the supply of air into the gaseous fuel flowing through the main fuel supply conduit 62 is increased. Accordingly, the air fuel ratio can be precisely tuned to remain in a specified range.

In the present case, the air introducing conduit 84 is communicated to the main fuel supply conduit 62 on a side downstream of the main needle valve 85. Therefore, the main needle valve 85 can adjust the flow rate of the mixture of the gaseous fuel flowing through the main fuel supply conduit 62 and the air supplied into the main fuel supply conduit 62. Therefore, if the amount of air supply into the main fuel supply conduit 62 is increased, the amount of gaseous fuel supply will correspondingly decrease as is indicated in Figure 19a. Accordingly, the amount of air supply to the engine 11 can be made smaller and also the variation width of the amount of air supply in the air-fuel ratio adjustment can be made smaller, in comparison with that of conventional systems in which the air-fuel ratio has been adjusted simply by adding air to the fuel flowing with a generally constant flow rate.

Moreover, a similar layout of the system has been chosen for the auxiliary fuel supply circuit comprising a corresponding air introducing conduit 87 from the downstream side of the venturi section 75 to deliver same to a midway portion of the idle fuel supply line or second outlet conduit 67. The corresponding idle air bleed control valve 83 has the same structure as the air bleed control valve 82 and is also accommodated in the common housing 90, both air bleed control valves 82, 83 being driven commonly by the same stepping motor 86. The air bleed control valve 83 functions in the same manner as the air bleed control valve 82, so that an amount of air corresponding to the opening degree of the needle valve 88 can be supplied into the idle fuel supply line 67 of the additional fuel supply circuit or second outlet conduit 67 (see arrow J).

As the two needle valves 85, 88 can be simultaneously moved by a single stepping motor 86 under the control of an output signal from the CPU 72 responsive to the oxygen content as detected by the oxygen sensor 89, to introduce a respective amount of air, fuels from both the main fuel supply circuit 62 and the additional fuel circuit 67 will be simultaneously controlled. Therefore, the "connection" as indicated above is left to automatic control and a fuel supply system is achieved through which a smooth transition between both systems can be obtained, although the main fuel supply circuit 62 and the additional fuel supply circuit 67 are provided independently from each other.

By means of the engine temperature sensor 91, the temperature of the cooling water in the associated cooling jacket 28 formed for the cylinder block 12 and the cylinder head 16, the air bleed control valve 82 is opened or closed in response to a signal from the CPU 72, based on said temperature responsive output of the temperature sensor 91, i.e. when the cooling water temperature is low the air bleed control valve 82 is closed to increase the amount of fuel relative to the amount of intake air.

Incidentally, the fuel amount supplied through the main fuel supply conduit or circuit 62 or the additional fuel supply conduit or circuit 67 does not only depend on the needle valves 76 and 101, but also depends on the needle valve 81 and the associated transition port 79 (see Figure 2). As is apparent from the embodiments, the additional fuel supply conduit 67 has two outlets joining the intake passage 74 of the carburetor 31, either both being disposed upstream of the throttle valve 77 (see Figure 5) or joining at both sides of the throttle valve 77 (see Figure 2). With respect to the embodiment according to Figure 5, at idling, when the throttle valve 77 is almost closed fuel is supplied from the outlet of the needle valve 101 disposed downstream of the throttle valve 77. In case the throttle valve 77 is opened, the amount of fuel which is supplied from the transition port 79 positioned at the upstream side of the throttle valve 77 is increased.

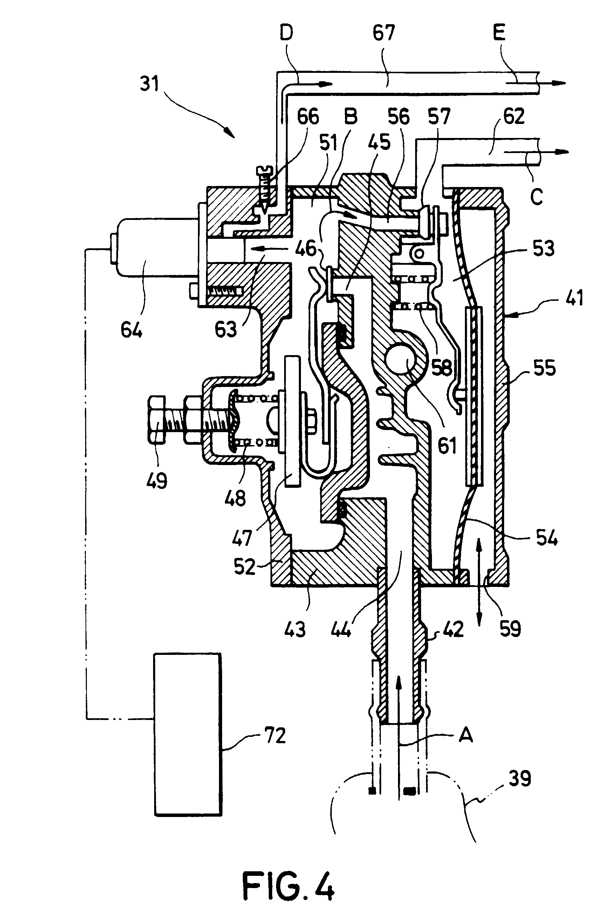

Figures 4 and 5 illustrate another embodiment of the invention which is generally the same as the embodiment of Figures 1 through 3 and, for that reason, components of this embodiment which are the same as the previously described embodiment have been identified by the same reference numerals and will not be described again, except insofar as is necessary to understand the construction and operation of this embodiment.

This embodiment deletes the incorporation of enrichment for cold starting and for acceleration and hence the enrichment control valve 71 and conduits associated with it are deleted. In addition, in this embodiment the idle fuel is adjusted by an idle fuel adjusting screw 101 that cooperates with the idle discharge port 78 of the carburetor 31. The transition ports 79 in this embodiment have no fuel controlling needle valve. Aside from these two difference, this embodiment is the same as that previously described and, for that reason, further description of this embodiment is not believed to be necessary to understand the construction and operation of the invention.

The intake passages 17 are disposed so that their discharge ends or port openings 17A discharge the intake charge to the combustion chamber 15 in a generally central direction so as to reduce turbulence and flow restriction and permit good volumetric efficiency. However, when this is done there is very little turbulence in the combustion chamber 15 at low speeds and at idle. The lack of turbulence under these running conditions can prevent complete combustion since it has been recognized that turbulence in the combustion chamber 15 is desirable at idle and low speeds in order to insure rapid flame propagation and complete combustion.

Therefore, the intake passages 17 are each provided with auxiliary intake ports 92 that are formed adjacent the port openings 17A but which are disposed on opposite sides thereof as best shown in Figure 7. The auxiliary intake ports 92 are served by auxiliary intake passages 93 that are formed in the cylinder head 16 and which extend from the intake face thereof to the auxiliary intake ports 92. These auxiliary intake passages 93 communicate at their inlet ends with a further passage 94 formed in the manifold runners 34. A throttle valve 95 is positioned downstream of the passages 94 in the runner sections 34 and are controlled either by a vacuum operated servo motor in response to engine load or a linkage system which cooperates with the linkage system for operating the carburetor throttle valve 77 so that the throttle valves 95 will be closed at low speed and low load conditions and will open as the engine moves to off idle or high speed conditions.

As may be seen in Figure 7 the auxiliary intake ports 92 are directed generally downwardly and toward each other so that their flow discharges along lines 96 which intersect at a point P₁ which is approximately located beneath the spark plug 27. Thus, the charge will flow as shown in the direction of the arrow K inwardly and downwardly to strike the head of the piston 14 and then be redirected as shown by the line L in Figure 6 so as to provide a tumble type of action in the combustion chamber 15.

Because the throttle valves 95 are closed at low speed and low load the charge that enters the combustion chamber 15 will be delivered primarily through the auxiliary intake ports 92 at a high velocity and in the direction as aforenoted. As a result of this, there will be a high turbulence generated in the combustion chamber 15 which will not adversely effect the firing of the spark plug 27 but which will, in fact, cause rapid flame propagation and good and complete combustion at low engine speeds and loads.

As the engine speed and load increases, the throttle valves 95 will be opened and the amount of charge entering through the auxiliary intake ports 92 will be relatively small and hence any turbulence generated will not adversely affect the volumetric efficiency of the engine 11. In this way, the engine 11 achieves high turbulence at low speeds while, at the same time, not sacrificing volumetric efficiency under higher speed and load conditions.

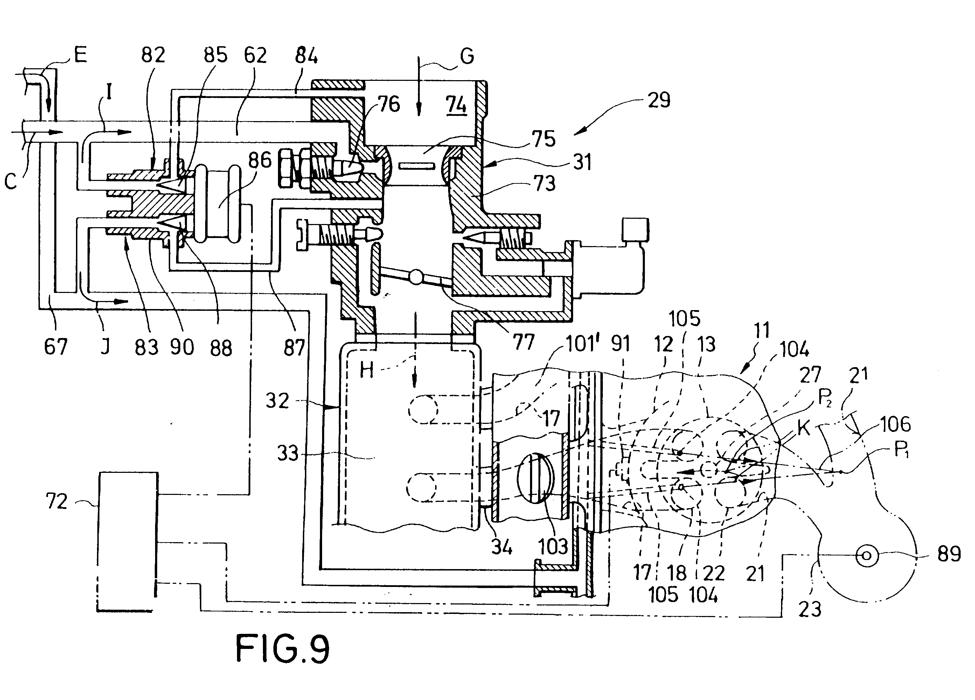

Figures 8 and 9 show another embodiment of the invention which is generally similar to the embodiment of Figures 6 and 7.

For that reason, components which are the same as the previously described embodiment have been identified by the same reference numerals and will be described again only insofar as is necessary to understand the construction and operation of this embodiment.

This embodiment differs from the embodiment of Figures 6 and 7 in three regards. First, this embodiment includes, in addition to the main plenum chamber 32, an additional high speed plenum chamber 101' which extends across the upper portions of the manifold runners 34 and communicates with each of them through respective passageways 102 in which throttle valves 103 are positioned. The throttle valves 103 are operated either by a vacuum servo motor or a linkage system so that they will be held in their closed positions when the engine is operating at low and mid range. This closed position is shown in solid lines in Figure 8. However, as the engine speed and load increases and particularly at high speeds, the throttle valves 103 are moved to the open position as shown in phantom lines. In this position, there will be some high speed tuning as a result of the pulses from the other cylinders, all of which communicate with the plenum chamber 101' so as to further improve high speed charging efficiency.

Another difference between this embodiment and that of Figures 6 and 7 is that in this embodiment the carburetor 31 is not provided with any idle or transition circuit but rather the idle transition and enrichment fuel supplies are supplied to the engine 11 through the auxiliary induction system. Also, because of this distinction the throttle valves 95 of the previously described embodiment are not required. Rather, the main throttle valve 77 serves the same purpose.

In this embodiment, auxiliary intake ports 104 are formed at adjacent sides of the main port openings 17A by means of drilled passageways 105 that extend through the cylinder head 16 from its intake surface. These drilled passageways 105 define lines 106 that intersect as the flow enters the combustion chamber 15 but in this case the intersection is at a point P₁ which is disposed on the opposite side of the cylinder head 16 and out of the combustion chamber 15.

Due to this, the flows pass along at both sides of the spark plug 27 leaving the gap of the spark plug 27 dry and maintaining good ignition efficiency of the spark plug 27. However, there still would be a convergence of the flow and this flow will be deflected by the cylinder bore 13 to a point P₂ where contact with the head of the piston 14 will occur and then the flow is turned back in the opposite direction to provide the turbulence and tumble action as with the previously described embodiment.

It is preferred to let both flows collide shortly before the ignition timing in order to utilize said turbulence generated by this collision very effectively for the combustion of the mixture.

In this embodiment, the manifold runners 34 are provided with a protuberance 107 in which a cross drilled passageway 108 is formed which is intersected by corresponding extensions of the drilled passageways 105 formed in the manifold runners 34. The second outlet conduit 67 which delivers the idle and off-idle fuel as well as the cold starting and acceleration enrichment fuel supplies directly to an inlet of the cross drilled passageway 108. As a result, the idle charge and enrichment charges will be delivered directly to the combustion chamber 15 and hence transient conditions will be more adequately met and the amount of enrichment fuel required will be less. As noted previously, this arrangement also eliminates the need for the throttle valves 95.

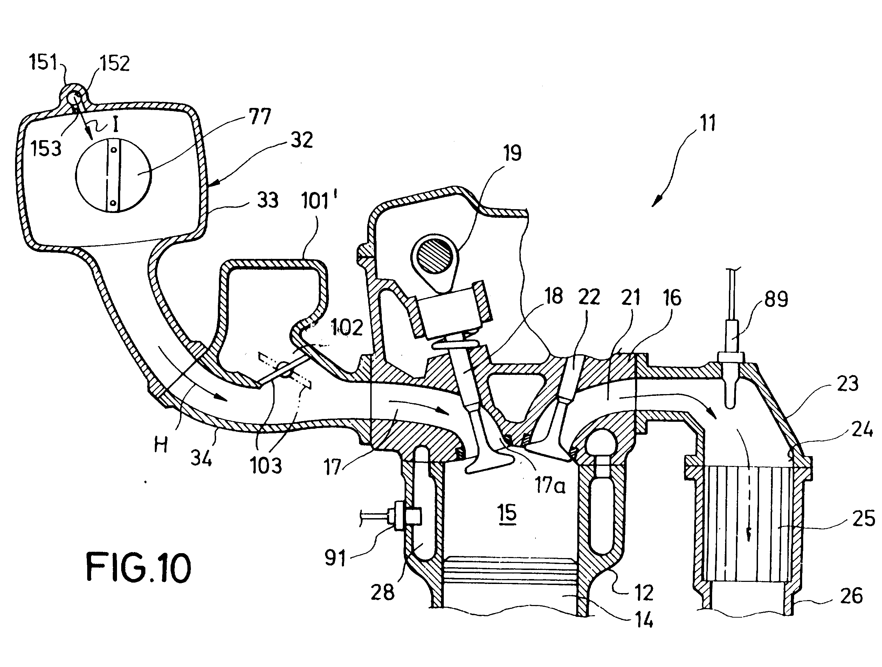

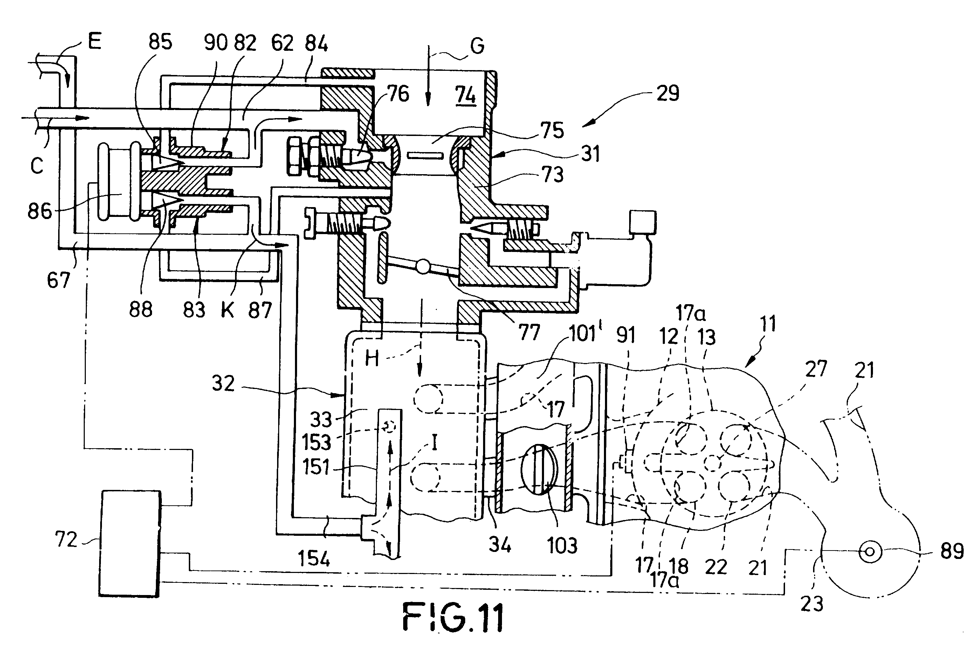

Figures 10 and 11 show another embodiment of the invention which is generally the same as the embodiment of Figures 8 and 3 and, for that reason, components which are the same as that embodiment or as previous embodiments have been identified by the same reference numerals. Again, these common components will not be described again except where necessary to understand the construction and operation of this embodiment.

This embodiment differs from the embodiment of Figures 8 and 9 in that the auxiliary intake ports 104, passages 105 and supply conduit 108 are eliminated. In this embodiment, the idle charge of fuel and the enrichment fuel is supplied to the plenum chamber 32 of the main induction system 29 rather than directly to the cylinder head 16. As a result, this embodiment does not provide the advantages of having the turbulence at low speeds. However, it does have the advantage in simplification of the carburetor 31 in that it does not need idle, off-idle or enrichment circuits. Also, because the charge is delivered directly to the plenum chamber 32, there will be good mixture distribution and there will be no loss of charging efficiency.

In this embodiment, the plenum chamber 32 is provided with an extending ridge 151 through which a transversely extending passage 152 is formed. The passage 152 has a plurality of individual runner sections 153 that intersect it and which discharge into the plenum chamber 32 at spaced locations along its length which correspond to the manifold runners 34.

The second outlet conduit 67 from the regulator 41 supplies the charge directly to this small manifold formed by the protrusion 151 through an inlet 154 thereto. As a result, the idle, starting and acceleration enrichment charges will enter as shown in the direction of the arrows I in this figure to achieve good mixing and good mixture distribution.

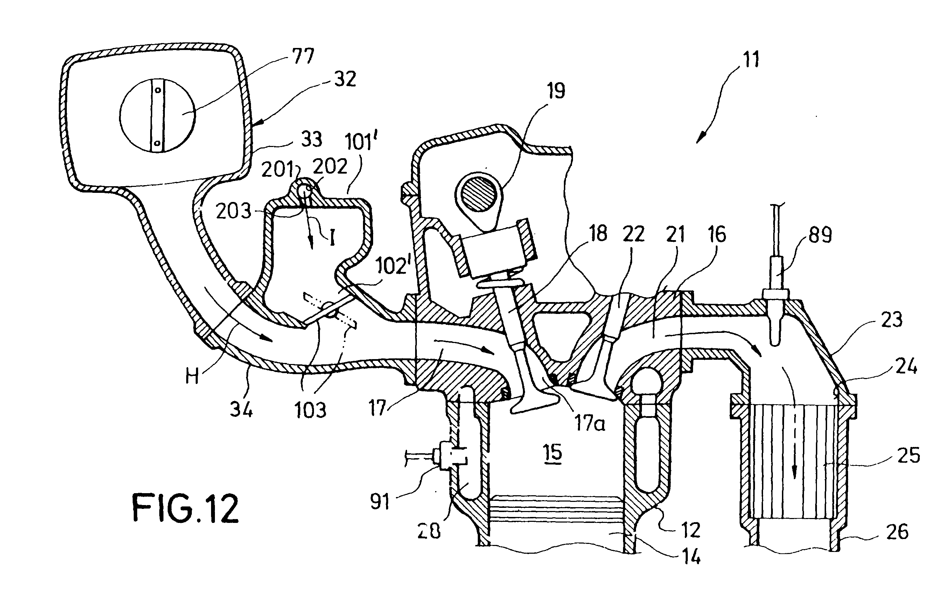

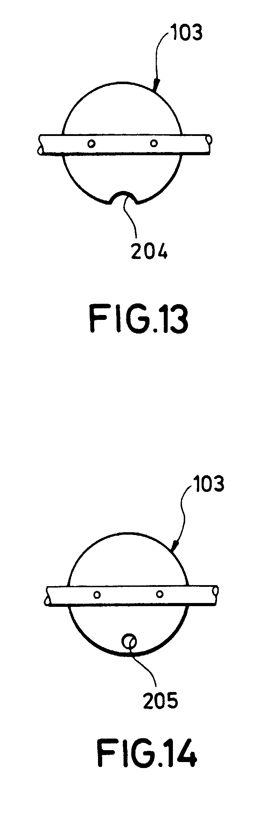

Figures 12 and 13 show another embodiment of the invention which is similar to the embodiment of Figures 10 and 11. For that reason, components which are the same as the previously described embodiment or other embodiments have been identified by the same reference numerals. In addition, because of the similarities it is believed that a view corresponding to the view of Figure 11 is not required as it is believed that the construction will be obvious to those skilled in the art.

In this embodiment, the second outlet conduit 67 from the pressure regulator 41 supplies idle and enrichment fuel for starting cold operation and acceleration to a manifold formed by a ridge 201 that extends along the upper surface of the high speed plenum chamber 101'. A transversely extending passage 202 is formed in this protrusion and communicates with the high speed plenum chamber 101' through a plurality of discharge ports 203. The discharge ports 203 are aligned with the high speed plenum chamber openings 102' that communicate with the manifold runners 34.

Since the idle charge is delivered to the high speed plenum chamber 101' and since the throttle valves 103 are normally closed under idle and low speed operation, each throttle valve 103 is formed with an arcuate cut-out 204 (Figure 13) that permits the fuel from the manifold passage 202 and discharge ports 203 to enter the manifold runners 34. Because of the small passage formed by the cut-outs 204, a high speed air flow will result which will add to the turbulence and improve mixture distribution.

Rather than a peripheral cut-out, the valves 103 may be formed with through bores 205 as shown in Figure 14 which serve the same function of permitting flow of idle and enrichment charge from the high speed plenum chamber 101" into the manifold runner sections 34.

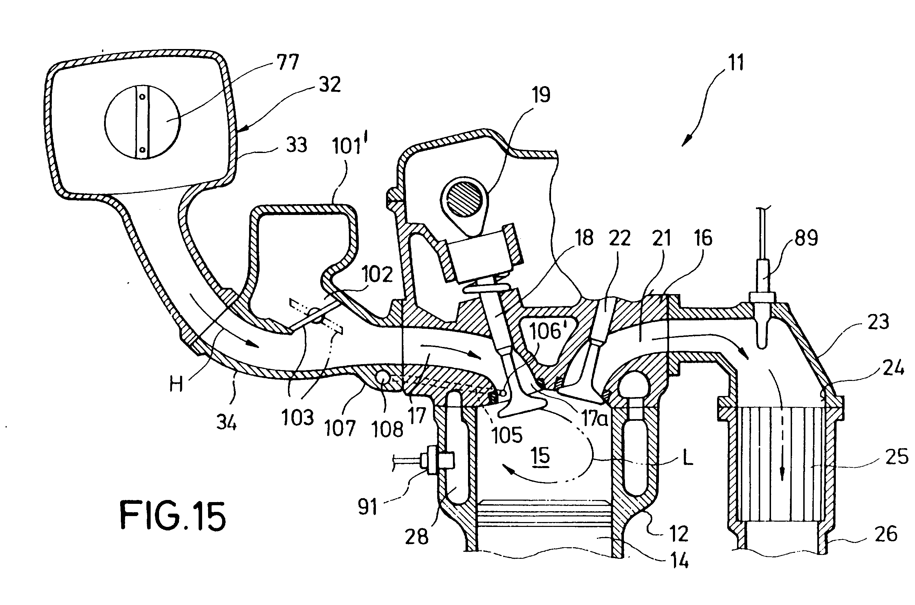

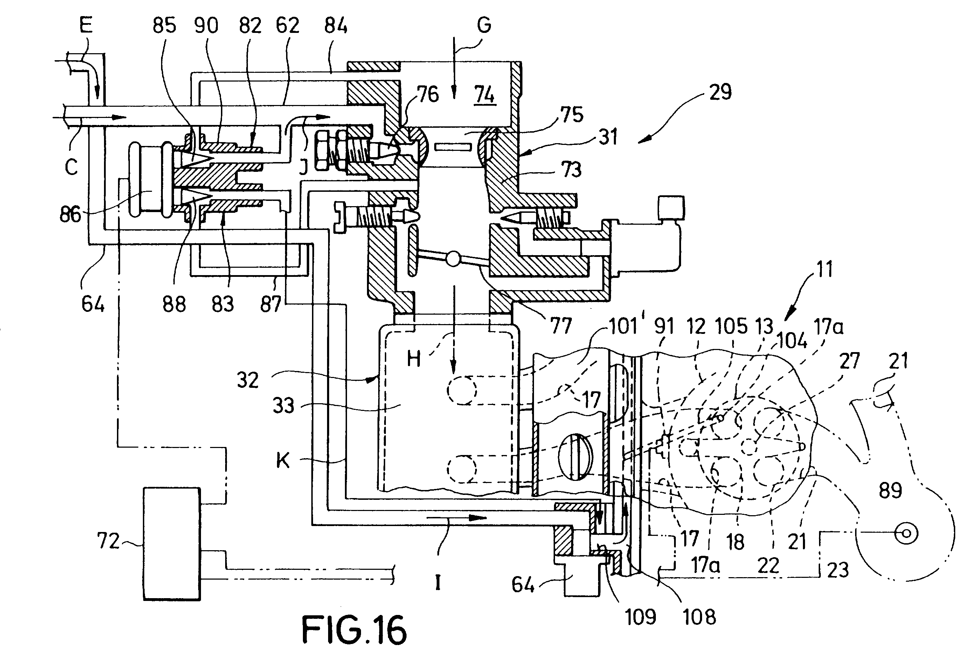

Figures 15 and 16 show another embodiment of the invention and this embodiment is generally the same as the embodiments of Figures 8 and 9. For that reason, components of this embodiment which are the same as the embodiment of Figures 8 and 9 have been identified by the same reference numerals and will not be described again in detail, except insofar as is necessary to understand the construction and operation of this embodiment.

This embodiment differs from the embodiment of Figures 8 and 9 and, for that matter, from all other embodiments in that the shut-off valve 64 of the previously described embodiments, which was incorporated in the regulator 41, is employed not in the regulator 41 but at the point where the second outlet conduit 67 communicates the idle and enrichment charges with the inlet 109 to the idle and enrichment discharge passageway 108. This valve is shown with the same numerical designation 64 in Figure 16 and, as noted above, this is the only difference between this embodiment and the previously described embodiments.

It should also be noted that in the embodiments thus far described, there has been provided not only the shut-off valve 64 but also a separate enrichment valve 71. It should be understood that the separate enrichment valve 71 may be deleted if the enrichment function is not desired.

This embodiment also furnishes only one of the main intake ports 17A with an auxiliary intake port 106' and supplying passageway 105. As a result, in this embodiment there will not be as much of a tumble action generated and movement generated within the combustion chamber 15 will be more that of a swirl type action as shown by the arrow L. However, since the passageway 105 and port 106' are directed downwardly, there will be some redirection of the flow upon contact with the piston 14 and some, all be it slight, tumble action will also result. It should be understood that such a different porting arrangement for achieving swirl predominately rather than tumble predominately may be incorporated with any of the previously described embodiments.

Also, it should be noted that this embodiment bleeds the air from the idle air bleed control valve 83 into the intake port 109 for the passageway 108 rather than into the passageway 64. In any event, however, the air is mixed with the fuel before it is delivered to the combustion chambers 15 so as to control the air/fuel ratio.

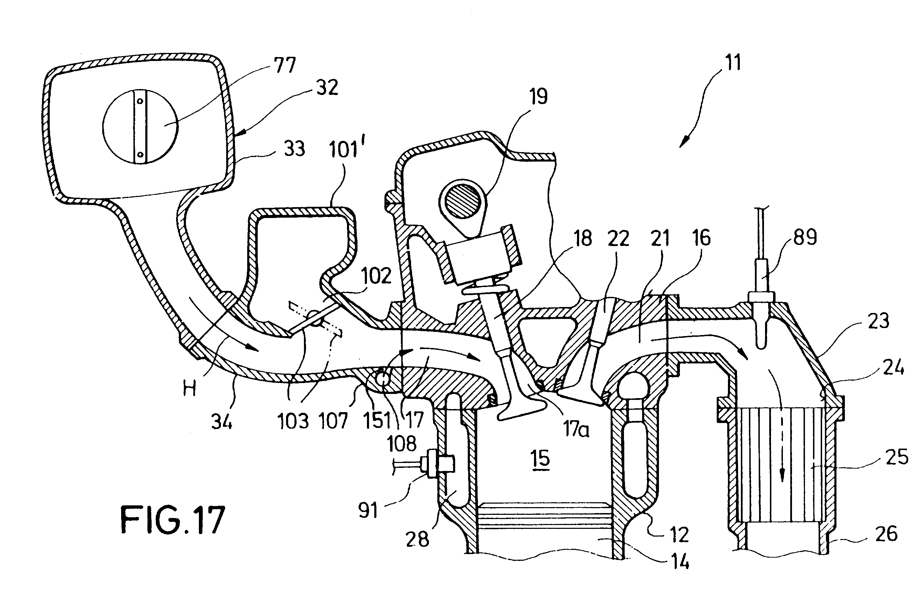

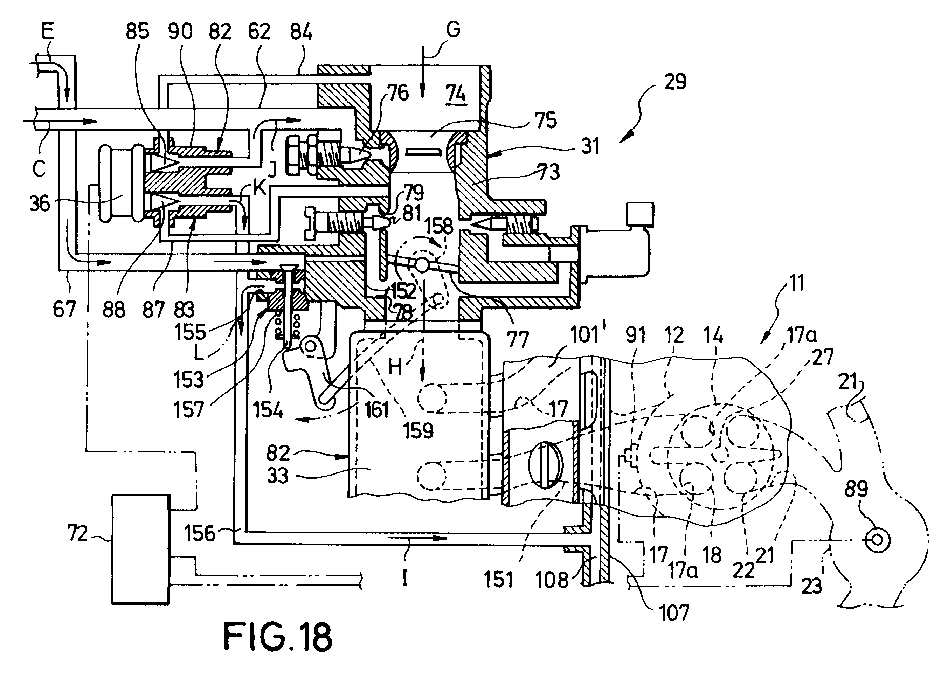

Figures 17 and 18 show another embodiment of the invention which is generally similar to the embodiment of Figures 8 and 9 but which, unlike that embodiment, also incorporates an idle discharge circuit in the carburetor 31 like the embodiment of Figures 6 and 7. For these reasons, components of this embodiment which are the same as the embodiments of Figures 8 and 9 or of Figures 6 and 7 have been identified by the same reference numerals.

It should be noted that in this embodiment the auxiliary intake ports are comprised of drilled passageways 151 that extend into the manifold runners 34 from the auxiliary passageway 108 formed in the protuberance 107 of the manifold sections 34. The flow from the runners 34 will easily mix with the air charge passing through the intake passages 17 and insure good mixing of the fuel and air.

As may be seen best in Figure 18 in this embodiment the supply of idle and enrichment fuel from the regulator (not shown) through the line or second outlet conduit 67 does not have air mixed with it directly so as to control the air/fuel ratio. Rather, this line 67 communicates directly with a small idle air passage 152 formed in the main body portion 73 of the carburetor 31 which intersects the passage forming the idle port 78 and transient port 79. There is, however, provided a valve body, indicated generally by the reference numeral 153 which includes a poppet type valve 154 that controls the communication with a further port 155 formed in the valve body 153 and which intersects a conduit 156 extending from the air bleed control valve 83 to the passageway 108. The poppet valve 154 is normally urged to a closed position by a coil compression spring 157.

A linkage system is incorporated that will open the poppet valve 154 when the engine 11 is in off-idle position so as to direct fuel flow through the conduit 156 to the passageway 108 for introduction into the manifold runners 34 through the passageways 151.

This linkage system includes a lever 158 fixed to the shaft of the throttle valve 77 and which is connected to one end of a link 159. The opposite end of the link 159 is connected to a further lever 161 pivotally supported upon the main body portion 73 of the carburetor 31 and which engages the end of the poppet valve 154. When the throttle valve 77 is opened, the poppet valve 154 will be urged upwardly against the action of the coil spring 157 and flow will be permitted in the direction I mixed with the air flow K to the manifold runners 34 through the passageways 151 from the passageway 108. As a result of this, the air/fuel ratio on off-idle can be easily controlled and the aforenoted advantages will be obtained.

It should be readily apparent from the foregoing description that the described system provides extremely good engine operation with a gaseous fuel and allows the air/fuel ratio to be controlled with extreme accuracy by mixing air with the gaseous fuel after the pressure has been regulated but before the flow controlling device of the charge former so as to insure that the air added to the fuel will significantly alter the air/fuel ratio.

The described embodiments of the invention each are very effective in providing the desired air/fiel ratio and flow patterns of air introduced to the combustion chamber through the induction system by employing a number of different types of devices for altering the charging characteristics of the induction system. In addition, a tumble action or other types of action may be achieved in the combustion chamber due to the positioning and operation of these charging character devices such as the auxiliary passages. Furthermore, a system is provided wherein the main fuel for the engine is supplied through the carburetor circuit but fuel for other running purposes may be supplied to other portions of the induction system. It should be noted that all of the embodiments illustrated and described refer to the use of gaseous fuel. It should be apparent to those skilled in the art, however, that certain facets of the invention may be employed in conjunction with liquid fueled internal combustion engines.

## Claims

1. Gas engine (11) comprising a source (39) of gaseous fuel stored under pressure as a liquid, said gaseous fuel being supplied to a carburettor (31) of an induction system (29) for inducting atmospheric air and delivering an air/fuel mixture to a combustion chamber (15) of the engine (11) under control of a control means (72) controlling said air/fuel ratio of the mixture in response to engine operating conditions, wherein the gaseous fuel is supplied to the carburettor (31) via a pressure regulator (41) which comprises a first outlet conduit (62) opening to a venturi section (75) of the carburettor (31) via a flow control valve (76) and a second outlet conduit (67) supplying fuel for idle condition towards the combustion chamber (15) and wherein an air bleed control valve means (82) is controlled by said control means (72) for bleeding air into the gaseous fuel flows of said first and second outlets conduits (62, 67) with bleeding air being supplied from upstream of the venturi section (75) to be introduced into the first outlet conduit (62) upstream of the flow control valve (76), **characterized by** bleeding air being supplied from downstream of the venturi section (75) to said second outlet conduit (67).

2. Gas engine as claimed in claim 1, **characterized in that** the control means (72) comprises at least one needle valve (76,81,101) of said carburettor (31).

3. Gas engine as claimed in claim 1 or 2, **characterized in that** in addition to said air bleed control valve means (82) for introducing atmospheric air into the flow of gaseous fuel upstream of the carburettor (31) there is provided a separate air bleed valve (83) for receiving atmospheric air, wherein preferably such a separate air bleed valve (82,83) is provided for each of the first and second outlet conduits (62,67) of the carburettor (31).

4. Gas engine as claimed in at least one of the preceding claims 1 to 3, **characterized by** means (69,66) for adding additional fuel to the air/fuel mixture under certain engine running conditions such as cold-starting or acceleration.

5. Gas engine as claimed in at least one of the preceding claims 1 to 4, **characterized by** means (64) for at least partially shutting off the supply of fuel to at least one of the first and second outlet conduits (62,67) of the carburettor (31) in the event of an emergency situation.

6. Gas engine as claimed in at least one of the preceding claims 1 to 5, **characterized in that** a second air bleed control valve means (83) for introducing atmospheric air to the second outlet conduit (67) comprises a conduit (87) being arranged downstream the venturi section (75) of the induction system (29) and for supplying air to the second outlet conduit (67) under control of a needle valve (88).

7. Gas engine as claimed in at least one of the preceding claims 1 to 6, **characterized in that** said or both air bleed control valve means (82,83) for introducing atmospheric air into said flow of gaseous fuel upstream of said carburettor (31) being controlled by the signal of a sensor, preferably of an oxygen sensor (89), said sensor being provided to maintain constant the air/fuel ratio by mixing atmospheric air into said flow of fuel.

8. Gas engine as claimed in at least one of the preceding claims 1 to 7, **characterized in that** the first outlet conduit (62) and said second outlet conduit (67) are subject to a feedback control of said or both air bleed control valve means (82,83) for introducing air into the flow of fuel, said air bleed control valve means (82,83) simultaneously controlling the flow of fuel through the first and second outlet conduits (62,67) according to the concentration of oxygen in the exhaust gas as detected by an oxygen sensor (89), even if both outlet conduits (62,67) are separated from each other.

9. Gas engine as claimed in at least one of the preceding claims 3 to 8, **characterized in that** at least one of said air bleed control valve means (82,83) is operated by a stepping motor (86) enabling the amount of air introduced into said first and second outlet conduits (62,67) to be continuously varied in response to a stepping motor activating signal output from said control means (72).

10. Gas engine as claimed in at least one of the preceding claims 3 to 9, **characterized in that** both air bleed control valve means (82,83) are accommodated in a common housing (90), while said air bleed control valve means (82,83) can be operated commonly or independently by separately controlled stepping motors (86).

## Patentansprüche

1. Gasmotor (11), mit einer Quelle (39) eines gasförmigen, unter Druck als Flüssigkeit gespeicherten Brennstoffes, welcher gasförmige Brennstoff einem Vergaser (31) eines Ansaugsystems (29) zum Ansaugen atmosphärischer Luft zugeführt wird und der eine Luft-/Brennstoffmischung zu einer Verbrennungskammer (15) des Motors (11) unter Steuerung durch eine Steuereinrichtung (72) liefert, welche das besagte Luft-/Brennstoff-Verhältnis der Mischung unter Ansprechen auf Motor-Betriebskonditionen steuert, wobei der gasförmige Brennstoff dem Vergaser (31) über einen Druckregulator (41) zugeführt wird, der eine erste Auslaßleitung (62), die zu einer Venturi-Sektion (75) des Vergasers (31) über ein Strömungs-Steuerventil (76) mündet, und eine zweite Auslaßleitung (67) aufweist, welche Brennstoff für eine Leerlaufkondition zur Verbrennungskammer (15) führt, und wobei eine Luftanzapf-Steuerventileinrichtung (82) gesteuert ist durch die Steuereinrichtung (72) zum Einlassen von Luft in die Ströme des gasförmigen Brennstoffs der ersten und zweiten Auslaßleitungen (62), (67), wobei die abgezapfte Luft zugeführt wird von stromauf der Venturi-Sektion (75) und einzuführen ist in die erste Auslaßleitung (62) stromauf des Strömungs-Steuerventils (76), gekennzeichnet durch Einführen von Anzapfungsluft von stromab der Venturi-Sektion (75) in die zweite Auslaßleitung (67).

2. Gasmotor nach Anspruch 1, dadurch gekennzeichnet, daß die Steuereinrichtung (72) wenigstens ein Nadelventil (76), (81), (101) des Vergasers (31) umfaßt.

3. Gasmotor nach Anspruch 1 oder 2, dadurch gekennzeichnet, daß zusätzlich zu der Luftanzapf-Steuerventil-Einrichtung (82) zum Einführen atmosphärischer Luft in die Strömung des gasförmigen Brennstoffes stromauf des Vergasers (31) ein separates Luftanzapf-Ventil (83) zum Aufnehmen atmosphärischer Luft vorgesehen ist, wobei vorzugsweise ein derartiges separates Luftanzapf-Ventil (82), (83) vorgesehen ist für jede der ersten und zweiten Auslaßleitungen (62), (67) des Vergasers (31).

4. Gasmotor nach wenigstens einem der vorhergehenden Ansprüche 1 bis 3, gekennzeichnet durch Einrichtungen (69), (66) zum Hinzufügen zusätzlichen Brennstoffes zu der Luft-/Brennstoffmischung unter bestimmten Motorlauf-Konditionen wie bei einem Kaltstart oder bei einer Beschleunigung.

5. Gasmotor nach wenigstens einem der vorhergehenden Ansprüche 1 bis 4, gekennzeichnet durch Einrichtungen (64) zum wenigstens teilweisen Absperren der Zufuhr von Brennstoff zu wenigstens einer der ersten und zweiten Auslaßleitungen (62), (67) des Vergasers (31) im Falle einer Notfallsituation.

6. Gasmotor nach wenigstens einem der vorhergehenden Ansprüche 1 bis 5, dadurch gekennzeichnet, daß die zweite Luftanzapf-Steuerventileinrichtung (83) zum Einführen atmosphärischer Luft zur zweiten Auslaßleitung (67) eine Leitung (87) aufweist, die stromab der Venturi-Sektion (75) des Ansaugsystems (29) angeordnet ist zum Zuführen von Luft zu der zweiten Auslaßleitung (67) unter dem Steuereinfluß eines Nadelventils (88).

7. Gasmotor nach wenigstens einem der vorhergehenden Ansprüche 1 bis 6, dadurch gekennzeichnet, daß die eine oder beide Luftanzapf-Steuerventileinrichtungen (82), (83) zum Einführen von atmosphärischer Luft in die besagte Strömung aus gasförmigem Brennstoff stromauf des Vergasers (31) durch das Signal eines Sensors gesteuert ist, vorzugsweise eines Sauerstoff-Sensors (89), und daß dieser Sensor vorgesehen ist zum Konstanthalten des Luft-/Brennstoff-Verhältnisses durch Zumischen atmosphärischer Luft in die Strömung des Brennstoffes.

8. Gasmotor nach wenigstens einem der vorhergehenden Ansprüche 1 bis 7, dadurch gekennzeichnet, daß die erste Auslaßleitung (62) und die zweite Auslaßleitung (67) einer Feedback-Steuerung unterworfen sind, von der einen oder von beiden Luftanzapf-Steuerventileinrichtungen (82), (83) zum Einführen von Luft in die Strömung des Brennstoffes, wobei die Luftanzapf-Steuerventileinrichtungen (82), (83) gleichzeitig die Strömung des Brennstoffes durch die ersten und zweiten Auslaßleitungen (62), (67) unter Berücksichtigung der Konzentration von Sauerstoff in dem Auspuffgas und wie erfaßt durch einen Sauerstoff-Sensor (89) steuern, selbst wenn beide Auslaßleitungen (62), (67) voneinander separiert sind.

9. Gasmotor nach wenigstens einem der vorhergehenden Ansprüche 3 bis 8, dadurch gekennzeichnet, daß wenigstens eine der besagten Luftanzapf-Steuerventileinrichtungen (82), (83) betätigt wird durch einen Schrittmotor (86), der es gestattet, die Menge von Luft, die in die ersten und zweiten Auslaßleitungen (629, (67) eingeführt wird, kontinuierlich zu variieren unter Ansprechen auf ein Schrittmotor-Aktiviersignal wie ausgegeben von der Steuereinrichtung (72).

10. Gasmotor nach wenigstens einem der vorhergehenden Ansprüche 3 bis 9, dadurch gekennzeichnet, daß beide Luftanzapf-Steuerventileinrichtungen (82), (83) in einem gemeinsamen Gehäuse (90) untergebracht sind, während die eine Luftanzapf-Steuerventileinrichtung (82), (83) gemeinsam mit der anderen betätigbar ist oder beide unabhängig durch separat gesteuerte Schrittmotoren (86) betätigbar sind.

## Revendications

1. Moteur à gaz (11) comprenant une source (39) de carburant gazeux stocké sous pression sous forme liquide, ledit carburant gazeux alimentant un carburateur (31) d'un système d'admission (29) destiné à admettre de l'air atmosphérique et à fournir un mélange air / carburant à une chambre de combustion (15) du moteur (11) sous la commande de moyens de commande (72) commandant ledit rapport air / carburant du mélange en réponse aux conditions de fonctionnement du moteur, dans lequel le carburant gazeux alimente le carburateur (31) par l'intermédiaire d'un régulateur de pression (41) qui comprend une première conduite de sortie (62) ouvrant sur une section de venturi (75) du carburateur (31) par l'intermédiaire d'une vanne de régulation de débit (76) et une seconde conduite de sortie (67) fournissant le carburant pour une condition de ralenti vers la chambre de combustion (15) et dans lequel une vanne de régulation d'injection d'air (82) est commandée par lesdits moyens de commande (72) afin d'injecter de l'air dans les débits de carburant gazeux desdites première et seconde conduites (62, 67), l'air d'injection étant fourni à partir du côté amont de la section de diffuseur (75) pour être introduit à l'intérieur de la première conduite de sortie (62) en amont de la vanne de régulation de débit (76), caractérisé par l'alimentation de l'air d'injection en provenance de l'aval de la section de venturi (75) vers ladite seconde conduite de sortie (67).

2. Moteur à gaz selon la revendication 1, caractérisé en ce que les moyens de commande (72) comprennent au moins une soupape à pointeau (76, 81, 101) du dit carburateur (31).

3. Moteur à gaz selon la revendication 1 ou la revendication 2, caractérisé en ce que, outre lesdits moyens de vanne de régulation d'injection d'air destinés à introduire de l'air atmosphérique dans le débit de carburant gazeux en amont du carburateur (31), il est fourni une vanne d'injection d'air séparée (83) destinée à recevoir de l'air atmosphérique, dans lequel une telle vanne d'injection d'air séparée (82, 83) est fournie de préférence pour chacune des première et seconde conduites de sortie (62, 67) du carburateur (31).

4. Moteur à gaz selon au moins l'une des revendications précédentes 1 à 3, caractérisé par des moyens (69, 66) destinés à ajouter du carburant en complément au mélange air / carburant sous certaines conditions de fonctionnement du moteur, par exemple lors d'un démarrage à froid ou à l'accélération.

5. Moteur à gaz selon au moins l'une des revendications précédentes 1 à 4, caractérisé par des moyens (64) destinés à fermer au moins en partie l'alimentation en carburant au moins vers l'une des première et seconde conduites de sortie (62, 67) du carburateur (31) en cas de situation d'urgence.

6. Moteur à gaz selon au moins l'une des revendications précédentes 1 à 5, caractérisé en ce qu'un second moyen de vanne de régulation d'injection d'air (83) destiné à introduire de l'air atmosphérique dans la seconde conduite de sortie (67) comprend une conduite aménagée en aval de la section de venturi (75) du système d'admission (29) et destinée à alimenter en air la seconde conduite de sortie (67) sous la commande d'une soupape à pointeau (88).

7. Moteur à gaz selon au moins l'une des revendications précédentes 1 à 6, caractérisé en ce que l'un ou les deux desdits moyens de vanne de régulation d'injection d'air (82, 83) destinés à introduire de l'air atmosphérique dans ledit débit de carburant gazeux en amont dudit carburateur (31) est commandé par le signal d'un détecteur, de préférence un détecteur d'oxygène (89), ledit détecteur étant fourni pour maintenir constant le rapport air / carburant en mélangeant l'air atmosphérique dans ledit débit de carburant.

8. Moteur à gaz selon au moins l'une des revendications précédentes 1 à 7, caractérisé en ce que la première conduite de sortie (62) et ladite seconde conduite de sortie (67) sont soumises à une commande en rétroaction par l'une ou les deux desdits moyens de vanne de régulation d'injection d'air (82, 83) afin d'introduire de l'air dans le débit de carburant, lesdits moyens de vanne de régulation d'injection d'air (82, 83) commandant le débit de carburant de manière simultanée au travers des première et seconde conduites de sortie (62, 67) en fonction de la concentration d'oxygène dans les gaz d'échappement détectée par un détecteur d'oxygène (89), même si les deux conduites de sortie (62, 67) sont séparées l'une de l'autre.

9. Moteur à gaz selon au moins l'une des revendications précédentes 3 à 8, caractérisé en ce qu'au moins l'un desdits moyens de vanne de régulation d'injection d'air (82, 83) est actionné par un moteur pas-à-pas (86) permettant une variation en continu de la quantité d'air introduite dans lesdites première et seconde conduites de sortie (62, 67) en réponse à un signal de sortie d'activation du moteur pas-à-pas en provenance desdits moyens de commande (72).

10. Moteur à gaz selon au moins l'une des revendications précédentes 3 à 9, caractérisé en ce que les deux moyens de vanne de régulation d'injection d'air (82, 83) sont disposés dans un logement commun (90), et lesdits moyens de vanne de régulation d'injection d'air (82, 83) peuvent être actionnés de manière conjointe ou indépendante par des moteurs pas-à-pas à commande séparée (86).
